# EUROPEAN PATENT SPECIFICATION

(11) **EP 3 185 716 B1**
(45) Date of publication and mention of the grant of the patent: **05.12.2018**
(21) Application number: 15774952.4
(22) Date of filing: 26.08.2015
(51) Int. Cl.: A45B 11/00

(54) **ADJUSTABLE GOLF TROLLEY UMBRELLA HOLDER**
EINSTELLBARER SCHIRMHALTER FÜR GOLFWAGEN
PORTE-PARAPLUIE RÉGLABLE POUR CHARIOT DE GOLF

(30) Priority: 26.08.2014 GB 201415095
(43) Date of publication of application: 05.07.2017
(73) Proprietor: Wallace, Robert, Maidenhead, Berkshire SL6 5BE (GB)
(72) Inventor: Wallace, Robert, Maidenhead, Berkshire SL6 5BE (GB)
(74) Representative: Spencer, Michael David
(86) International application number: PCT/GB2015/052463
(87) International publication number: WO 2016/030680

(56) References cited:
- US-A- 3 848 838
- US-A- 4 528 768

## Description

### Technical field

The invention relates to golf trolley umbrella holders.

### Background

Golf players usually use several different types of golf clubs when playing golf and typically use golf bags to store their golf clubs. When filled with golf clubs, golf bags can become very heavy and burdensome, making it difficult to carry them around a golf course. Therefore, golf bags can generally be attached to golf trolleys. Golf trolleys typically have a sturdy frame for receiving a golf bag, two wheels, and a handle. The user can easily mount the golf bag to the trolley, and then pull the trolley behind them as they travel around the golf course.

Due to the popularity of golf trolleys, many add on accessories are available. One such accessory is an umbrella holder. Golf trolley umbrella holders typically clamp to a golf trolley or golf bag, and are arranged to receive an umbrella. The umbrella holder may typically comprise a cup like structure which receives an umbrella handle. When in an open (uncollapsed) position, the umbrella keeps both the user and their clubs dry while the user walks over the golf course. When the trolley is unattended, such as when the user is playing golf, it is desirable to collapse, or remove, the umbrella to stop wind catching the umbrella and blowing the unattended trolley over.

Some golf trolley umbrella holders allow the umbrella to be angled in a preferred orientation. Since rain does not usually fall at an angle exactly perpendicular to the ground, a user can angle the umbrella to match the direction of the rain. Additionally, some umbrella holders allow the user to rotate the umbrella to a retracted position such that the umbrella runs parallel to the bag, with the top of the umbrella pointing towards the ground.

To rotate the umbrella holder, typically a user must first loosen a locking nut which allows the umbrella holder to freely rotate about a pivot point. The user can then rotate the umbrella holder to the desired angle and tighten the locking nut. This then holds the umbrella in the desired orientation. However, manipulating a locking nut when wet can be cumbersome since users may struggle to get a good grip of the nut.
CA 1227394 describes a holder that is used to secure a collapsible umbrella to the top edge portion of an upstanding golf bag. The holder comprises two relatively-rotatable parts to angularly vary the position of the umbrella relative to the bag between a bag-sheltering position, a club-access position and an umbrella storing portion.
US 5,172,885 describes a holder assembly for mounting an umbrella on any of a variety of wire baskets used on golf carts, and includes a hollow tube in which an umbrella handle may be inserted and retained against accidental removal, with means to readily adjust the height of the umbrella, and means to accommodate various shapes and placements of wire baskets.

US 4 528 768 A discloses a fishing rod holder comprising a mounting bracket.

There remains a need to alleviate some of the aforementioned problems.

### Summary

It is an object of the invention to provide an improved golf trolley umbrella holder as defined by claim 1. Preferred features of the invention are set out in the dependent claims.

According to the present invention, there is provided a golf trolley umbrella holder comprising;
an attachment device arranged to attach the golf trolley umbrella holder to a golf trolley;
an umbrella holding device comprising a holder having a first and second opening, the openings arranged to allow a passage of a part of an umbrella;
a locking mechanism comprising a housing, a locking rod slidably mounted within the housing, a cam pivotally connected to the locking rod via a pivot, a biasing member arranged to act between the housing and the locking rod; wherein
the housing comprises a cam surface which is arranged such that, in use, the biasing member acts to urge the cam against the cam surface, causing the cam to rotate about the pivot and further causing a surface of the cam to apply a force to the part of the umbrella in a locking arrangement so as to prevent any axial movement of the umbrella.
wherein the locking arrangement is such that the part of the umbrella is held between the surface of the cam and an internal wall of the holder.
The surface of the cam may have a width equal to or greater than half of an internal width of the holder. The surface of the cam may comprise a resiliently deformable material. The inner surface of the holder may comprise a resiliently deformable material.
The locking rod may be arranged substantially parallel to the holder. The locking rod may comprise a handle located at an opposite end to the pivot.
The umbrella holding device may comprise an aperture through which the surface of the cam is arranged to pass through such that the surface of the cam can engage with the part of the umbrella.

The biasing member may comprise a spring. The spring may be coaxially arranged around a part of the locking rod. The holder may comprises a tube like structure having a generally circular cross section.

### Brief description of figures

The invention is described with reference to the accompanying figures in which:
Figure 1 is a cross section through an umbrella holder showing a first and second embodiments not part of the invention;
Figure 2 is a perspective view of the umbrella holder shown in Figure 1, showing the first and second embodiments not part of the invention;
Figure 3 is an enlarged cross section through an umbrella holder, showing the second embodiment not part of the invention;
Figure 4 is a perspective view of an alternative locking mechanism according to a third embodiment not part of the invention;
Figure 5 is a perspective view of an umbrella holder showing the first, third and a fourth embodiments not part of the invention;
Figure 6 is a cross section through a part of an umbrella holder, showing a twist and grip mechanism according to the fourth embodiment not part of the invention;
Figure 7 is a further cross section of the fourth embodiment;
Figure 8 is a perspective view of an umbrella holder according to a fifth embodiment according to the invention;
Figure 9 is a cross section through a part of the umbrella holder of the fifth embodiment;
Figure 10 is cross section through a part of an umbrella holder according to a sixth embodiment not part of the invention;
Figure 11 is a perspective view of the umbrella holder of the sixth embodiment;
Figure 12 is a perspective view of an umbrella holder according to a seventh embodiment according to the invention;
Figure 13 is a close up perspective view of a part of the umbrella holder of the seventh embodiment;
Figure 14 is a cross section through the umbrella holder of the seventh embodiment in an open position;
Figure 15 is a cross section through the umbrella holder of the seventh embodiment in a closed position;
Figure 16 is a perspective view of an umbrella holder according to an eighth embodiment according to the invention;
Figure 17 is a cross section through the umbrella holder of the eighth embodiment in an open position;
Figure 18 is a cross section through the umbrella holder of the eighth embodiment in a closed position;
Figure 19 is a cross section showing an alternative stop member in a closed position; and
Figure 20 is a cross section showing the alternative stop member in an open position.

### Detailed description

There will now be described a golf trolley umbrella holder that alleviates some of the aforementioned problems.

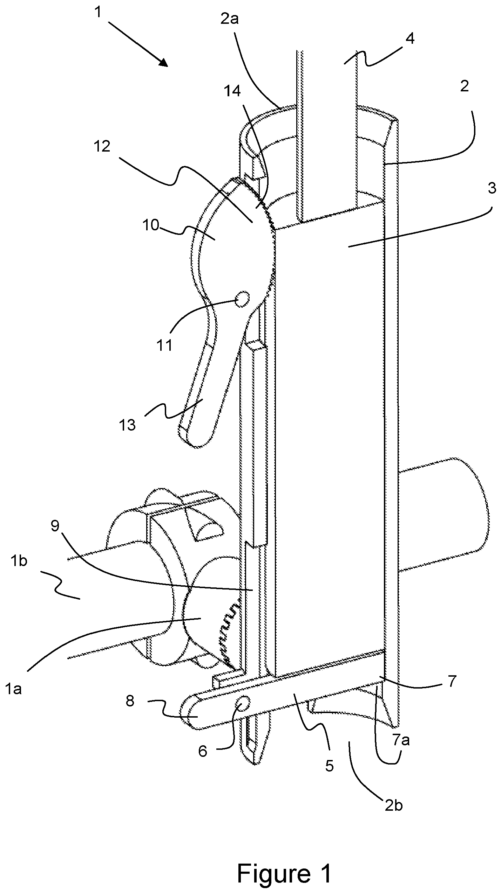

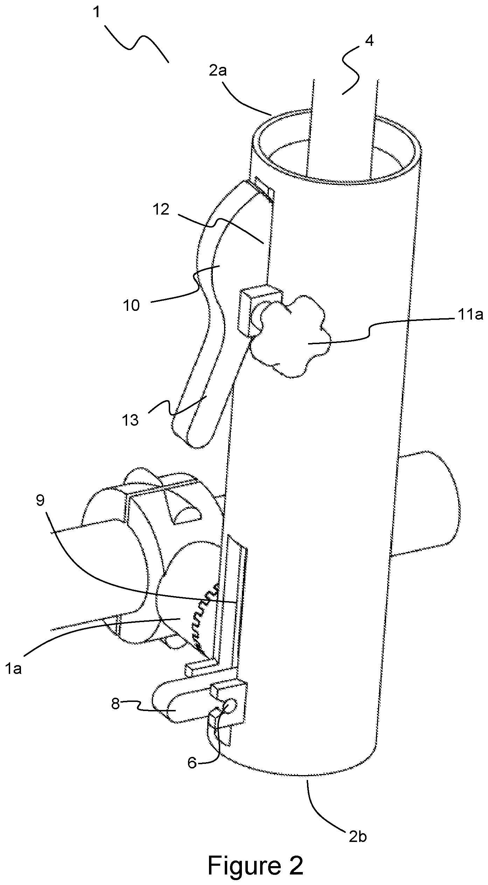

Figure 1 shows a cross section through a golf trolley umbrella holder 1 and Figure 2 shows a perspective view of the same holder 1. The golf trolley umbrella holder 1 has an umbrella holding device comprising a hollow tube 2 for receiving and accommodating a handle 3 and/or shaft 4 of an umbrella, and an attaching device comprising a clamp 1a for clamping the holder 1 to a golf trolley handle 1b. The umbrella holder may be clamped to other parts of a golf trolley. The hollow tube 2 has a first opening 2a at its upper end in which the handle 3 and/or shaft 4 can be inserted, and a second opening 2b at its lower end. The hollow tube 2 has an integral stop device for preventing an umbrella from freely passing through the tube 2.

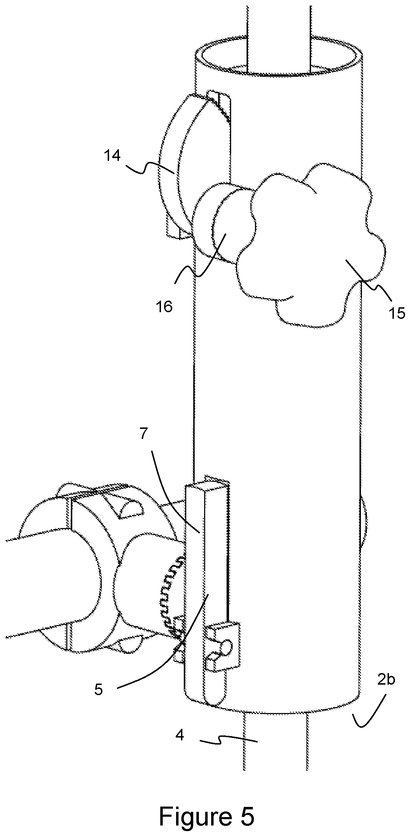

In a first embodiment, the stop device is provided by a stop member 5 which is pivotally connected at a pivot point 6 located at the lower end of the hollow tube 2. The stop member 5 is movable from a first, closed, position (shown in Figure 1) to a second, open, position (shown in Figure 5). The stop member 5 comprises a stop plate 7 and a stop handle 8, either side of the pivot point 6. The stop handle 8 is arranged to allow a user to move the stop member 5 between the first and second positions. When in the first position, the stop plate 7 provides a surface within the hollow tube 2 for the umbrella handle 3, or if the umbrella does not have a handle, the shaft 4, to rest against. This prevents the umbrella handle 3 or shaft 4 from passing through the second opening 2b. The stop plate 7 rests against a ledge 7a on an inner surface of the hollow tube 2 when in the first position. The ledge 7a provides a contact point so as to prevent further pivoting of the stop plate 7 once it has been moved into the first position. The hollow tube 2 has an aperture 9 which is arranged to allow passage of the stop member 5 when the stop member 5 is pivoted to the second position (shown in Figure 5). When in the second position, the stop plate 7 no longer provides a surface for the umbrella to rest against, allowing the handle 3 and shaft 4 of the umbrella to pass freely through the second opening 2b.

While the figures show the pivot point 6 being located on the outer circumference of the hollow tube 2, it will be appreciated by the skilled person that the pivot point 6 may be located anywhere such that by pivoting the stop member 5, the stop plate 7 no longer prevents the umbrella handle 3 or shaft 4 from passing freely though the hollow tube 2 and exiting through the second opening 2b.

Prior to inserting the umbrella, the user makes sure that the stop member 5 is in the first position. The user can then put the handle 3 of an umbrella into the hollow tube 2 through the first opening 2a. The handle 3 and/or shaft 4 passes through the hollow tube 2 and comes to rest against the stop plate 7. The stop plate 7 prevents the umbrella handle 3 and/or shaft 4 from passing through a second opening 2b of the hollow tube 2. The umbrella is then supported by the stop member 5, and can be used to protect the user and the user's golf bag against the rain. The length of the hollow tube 2 is of sufficient length so as to hold the umbrella upright when the umbrella rests against the stop member 5.
In order to lower the umbrella, the user uses the stop handle 8 to pivot the stop member 5 such that the stop plate 7 enters the aperture 9, unblocking access to the second opening 2b. The umbrella handle 3 and/or shaft 4 are then free to pass through the hollow tube 2, exiting through the second opening 2b. The umbrella can pass through the hollow tube 2 until either the handle 3 hits the floor or the spokes (not shown) of the umbrella come to rest on the circumference of the first opening 2a of the hollow tube 2.
The act of pivoting the stop member 5 will lift the umbrella slightly, as the stop plate 7 on which the umbrella rests moves upwards as the stop member 5 is pivoted. The user may lift the umbrella slightly during this movement in order to facilitate pivoting the stop member 5.

The first embodiment not part of the invention allows for a quick and simple way of lowering the umbrella to prevent the umbrella catching the wind and blowing the golf trolley over when left unattended. In a minimal amount of steps performed by the user, the umbrella is moved under gravity to its lowest possible position. The umbrella does not need to be collapsed, or removed, meaning that the umbrella can still shield the golf bag from the rain.
While the umbrella is prevented from passing through the second opening 2b, it is possible that a gust of wind could catch the umbrella and lift the umbrella out of the holder 1 via the first opening 2a. In order to help prevent this, according to a second embodiment not part of the invention, there is provided a locking mechanism which can be used with the first embodiment, and is arranged to prevent any axial movement of the umbrella. The locking mechanism of the second embodiment is provided by an eccentric locking cam 10, which is pivotally connected to the umbrella holder 1 via a cam pivot point 11. The eccentric locking cam 10 can be locked in place such that it cannot pivot. This locking action may be actuated by turning a knob 11a, which when rotated in one direction locks the eccentric locking cam 10 in place, and when rotated in the opposite direction, allows the eccentric locking cam 10 to pivot.

The eccentric locking cam 10 has an umbrella abutment end 12 and a cam handle 13. Using the cam handle 13, the user can pivot the eccentric locking cam 10 such that the umbrella abutment end 12 presses against a part of an umbrella, such as the handle 3 or the shaft 4. In turn, the handle 3 or shaft 4 are pressed against an inner wall of the hollow tube 2. The user applies enough force to the cam handle 13 such that the umbrella is tightly held in place between the cam 10 and the inner wall of the hollow tube 2. This helps secure the umbrella in place and prevents the umbrella from being blown out of the holder, for example. The umbrella abutment end 12 may have a toothed edge 14 to facilitate gripping of the umbrella. The locking mechanism of the second embodiment can be used to lock a variety of different types of umbrellas in place. For example, different umbrellas have handles and shafts of different widths, and some umbrellas may not have handles at all. This advantage is provided by the adjustable nature of the locking mechanism, which is achieved by the user pivoting the locking cam against the umbrella until a tight fit is achieved.

When using the locking mechanism of the second embodiment with the first embodiment, in order to lower the umbrella, the user first loosens the cam lock 11a and rotates the eccentric locking cam 10 such that the pressure applied to the handle 3 or shaft 4 of the umbrella is removed. The user can then use the stop lever 8 as described above.

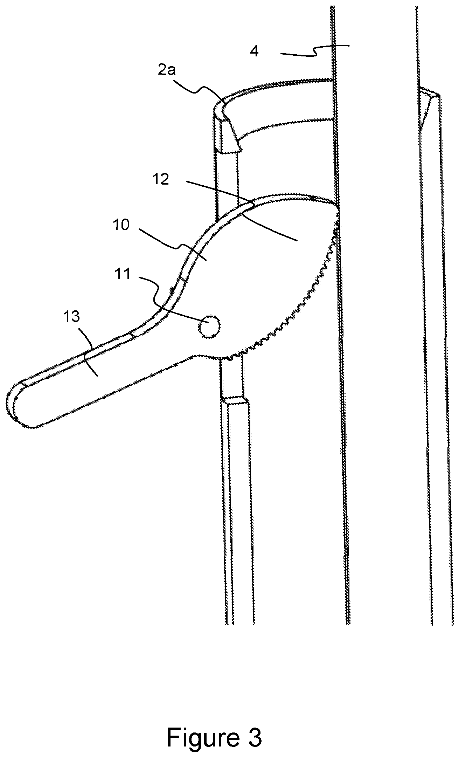

Figure 3 shows a cross section through the umbrella holder 1 with the umbrella abutment end 12 engaging with the shaft 4 of the umbrella. While the second embodiment has been described as being compatible with the first embodiment, the second embodiment may be used independently. Furthermore, when used independently, the locking mechanism may perform the function of the stop device, by securing the umbrella in place and preventing the umbrella from passing freely through the hollow tube 2. In such an arrangement, the stop device is provided by the eccentric cam 10. When implementing the second embodiment independently from the first embodiment, the user inserts the handle 3 and/or shaft 4 of the umbrella into the hollow tube 2, and uses the eccentric locking cam 10 to press the umbrella abutment end 12 against the handle 3 or shaft 4, which is then pressed against the inner wall of the hollow tube 2. The user can then lock the eccentric locking cam 10 in place by tightening the cam knob 11a. If the user wants to quickly and easily drop the umbrella, the user untightens the cam knob 11a and releases the eccentric locking cam 10 using the cam handle 13.

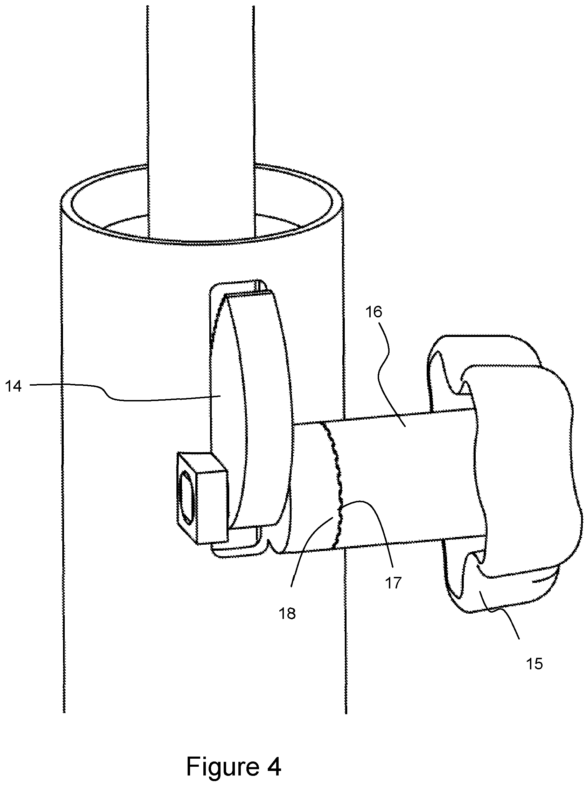

Figure 4 shows an alternative locking mechanism according to a third embodiment not part of the invention. The alternative locking mechanism comprises an alternative eccentric locking cam 14 and cam knob 15. The function of the cam handle 13 in the second embodiment has been replaced by the cam knob 15.
The cam knob 15 comprises a body 16 which is coupled to the alternative eccentric locking cam 14 such that rotation of the cam knob 15 results in rotation of the alternative eccentric locking cam 14. The body 16 has first interlocking plate 17 which is arranged to engage with a second interlocking plate 18 on the umbrella holder 1. The second interlocking plate 18 is rotationally fixed to the umbrella holder 1. The plates 17, 18 have corresponding interlocking teeth, which interlock when the plates 17, 18 are brought together, i.e. engaged.
The two interlocking plates 17, 18 are biased together via a biasing device, such as a spring or elastic line (not shown). The biasing device extends through the centre of both interlocking plates, and keeps the interlocking plates 17, 18 engaged such that the interlocking teeth interlock, preventing relative rotation of the plates. When the plates 17, 18 are engaged, the cam knob 15, and alternative eccentric locking cam 14, cannot be rotated.
When the user wishes to use the alternative locking mechanism, the user pulls the interlocking plates 17, 18 apart by pulling the cam knob 15 away from the second interlocking plate 18, such that the interlocking plates 17, 18 disengage. With the interlocking plates 17, 18 disengaged, the user then rotates the cam knob 15, which rotates the alternative locking cam 14. The user rotates the cam knob 15 such that the alternative eccentric locking cam 14 starts to press against a part of the umbrella. The user then releases the cam knob 15, which allows the biasing device to re-engage the interlocking plates 17, 18, preventing further relative rotational movement. A similar procedure is used to untighten the alternative locking mechanism.

The body 16 may be coupled to the eccentric locking cam 14 via a square drive. For example, the eccentric locking cam 14 may have a square aperture which is arranged to receive a peg that protrudes from the body 16, where the peg has a square cross section. Rotation of the cam knob 15 rotates the peg, which in turn rotates the eccentric locking cam 14. By using a square drive, no adhesive needs to be used to connect the body to the eccentric locking cam 14. When the user pulls the cam knob 15 away from the second plate 18, the square peg can slide through the square aperture, while the alternative eccentric locking cam 14 remains fixed in place. While a square drive mechanism has been described, it will be understood that other shapes may be used, such as a hexagon, to achieve the same effect.

While the interlocking plates 17, 18 have been described as having teeth, it will be appreciated that any suitable interlocking arrangement may be used, such as complementary saw-tooth tracks. A saw tooth arrangement provides a ratchet effect, which allows the user to rotate the cam knob 15 one way to tighten the alternative locking mechanism, and the ridges of the saw tooth prevent the cam knob 15 from rotating the other way. The user pulls the plates 17, 18 apart to disengage the saw tooth tracks, in order to rotate the cam knob 15 in the other direction, loosening the alternative locking mechanism.

The third embodiment relating to the alternative locking mechanism may be used with the first embodiment, or independently. If used independently, the alternative locking mechanism provides the role of the stop device, preventing the umbrella from passing freely through the hollow tube 2.

Figure 5 shows a further perspective view of the alternative locking mechanism of the third embodiment. Figure 5 also shows the stop member 5 in the second position, allowing the handle 3 and shaft 4 to pass through the second opening 2b.

While not shown in the figures, a guide plate may be used to help locate a part of the umbrella in the centre of the hollow tube 2. The guide plate may be located at the first opening 2a and may have a substantially U shaped recess for accommodating a part of the umbrella, such as the shaft 4. The guide plate may be coupled to the umbrella holder 1 via a guide plate pivot point. The U shaped recess acts as a guide for the shaft 4 of the umbrella, and keeps the umbrella shaft 4 in a central position when used in combination with either the locking mechanism or alternative locking mechanism.
A bottom guide plate (also not shown) may also be used, the bottom guide plate being located close to the second opening 2b. The bottom guide plate may have a similar recess to the guide plate for accommodating the shaft 4 of the umbrella. When the locking mechanism or alternative locking mechanism are used in conjunction with both the guide plate and bottom guide plate, the cams 10, 14 of the locking mechanisms push the umbrella against the guide plate and bottom guide plate, locking the umbrella in place. The bottom guide plate may be used to help prevent the shaft from being twisted when the locking mechanism is applied.

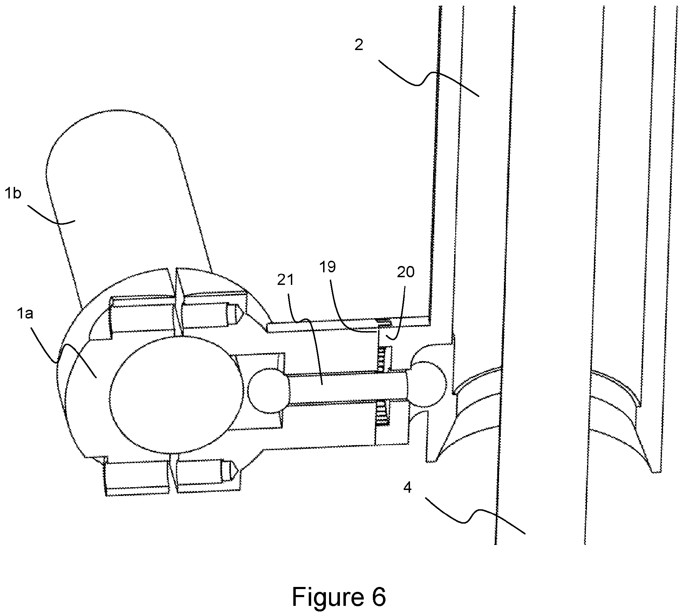

Figure 6 shows a cross section through the umbrella holder 1, and illustrates a twist and grip mechanism according to a fourth embodiment not part of the invention. The twist and grip mechanism is located between the clamp 1a and the umbrella holder 2, and provides users with a simpler way of rotating their umbrella holders to a desired rotation without having to manipulate locking nuts, which can be difficult when wet.
The umbrella holder 1 is clamped to the golf trolley by the clamp 1a. The clamp 1a has a third interlocking plate 19 having interlocking teeth which are arranged to interlock with corresponding teeth on a fourth interlocking plate 20 which is rotational fixed to the umbrella holder part.
The third and fourth interlocking plates 19, 20 are biased together by a knotted elastic line 21 (such as a rope or cord), which extends through the centre of both of the third and fourth interlocking plates 19, 20. It will be appreciated that any suitable biasing means may be used to bias the third and fourth interlocking plates 19, 20 together.
The knotted elastic line 21 provides a biasing force to hold the third and fourth interlocking plates 19, 20 together, and the interlocking teeth prevent relative rotational movement between the two interlocking plates 19, 20. When the user wishes to rotate the umbrella holding device relative to the clamp 1a, the user pulls the hollow tube 2 away from the clamp 1a, which disengages the third and fourth interlocking plates 19, 20. The user then rotates the hollow tube 2 such that the fourth interlocking plate 20 rotates about the axis of the knotted elastic line 21. The user can then release the hollow tube 2, allowing the knotted elastic line 21 to bring the third and fourth plates 19, 20 together again such that the interlocking teeth interlock and prevent further relative rotation.

The twist and grip mechanism described can be used to angle the umbrella to match the direction of the rain. Alternatively, the user can angle the umbrella holder for other reasons. For example, the user may want to rotate the umbrella through 180 degrees to a retracted position such that the umbrella runs parallel to the bag, with the top of the umbrella pointing towards the ground. The locking mechanism or alternative locking mechanism described above may be used to prevent the umbrella falling out of the first opening 2a in such a case. The twist and grip mechanism can also be used to easily rotate the umbrella holding device such that it is parallel with the golf trolley handle when not in use. The fourth embodiment can be used with any of the other embodiments of the invention.

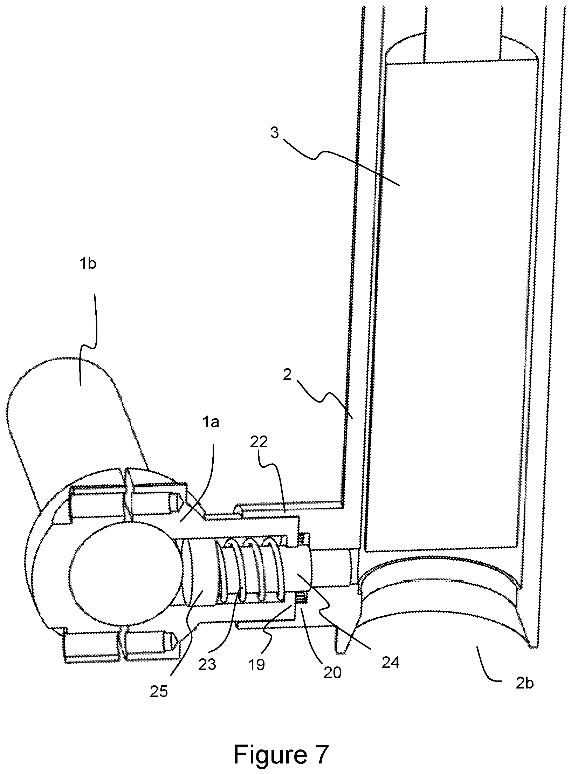

A collar may be located around both interlocking plates 19, 20 to act as a shield (not shown in Figure 6). Figure 7 shows a collar 22 extending from the hollow tube 2 and covering the interlocking plates 19, 20. Alternatively, the collar may be a separate component. The collar 22 helps to prevent a user from trapping fingers between the interlocking plates. The collar 22 may also help to hold the two interlocking plates 19, 20 together. For example, in heavy wind, the interlocking plates 19, 20 may be twisted relative to one another, causing a disengagement of the interlocking plates 19, 20. While not shown, a collar may also be located around the interlocking plates 17, 18 of the third embodiment.

Figure 7 also shows a biasing spring 23 which is an alternative biasing means to the knotted elastic line 21 shown in Figure 6. A shoulder bolt 24 is coupled to the hollow tube 2, and passes through the interlocking plates 19, 20. The spring 23 acts to bias a shoulder 25 of the shoulder bolt 24 towards a back surface of the interlocking plate 19.

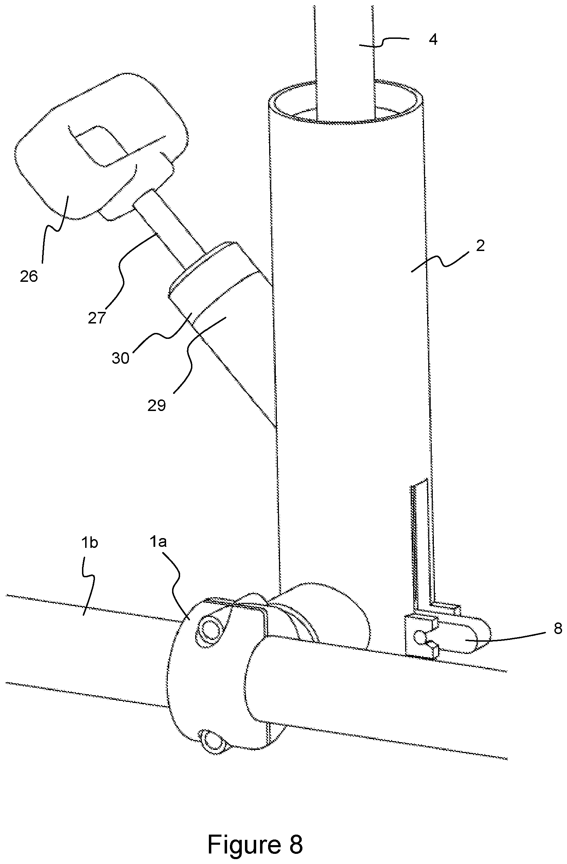

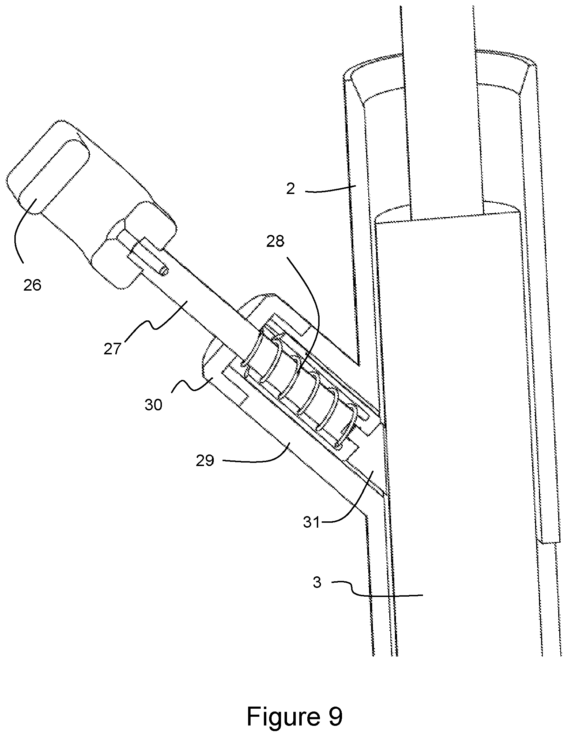

Figures 8 and 9 show a locking mechanism according to a fifth embodiment according to the invention. The locking mechanism according to the fifth embodiment comprises a locking handle 26, locking shaft 27, locking spring 28, a housing 29, an end cap 30 and a locking wedge 31. The locking spring 28 is arranged to bias the locking wedge against a part of the umbrella (either the handle 3 or the shaft 4), and thus prevent axial movement of the umbrella. The biasing arrangement is angled downward relative to the hollow tube 2, so that any lifting motion of the umbrella in a strong wind will tighten the locking mechanism. The locking wedge 31 may have a U or V shaped profile when viewed from above (not shown in the figures) and may comprise a rubber grip. Alternatively, locking wedge 31 may have a curved profile when viewed from above. The curved profile may have a similar curvature to the hollow tube 2, such that wherever the umbrella shaft 4 or handle 3 is located within the hollow tube 2, the locking wedge will make contact with the umbrella, pressing it against the inner surface of the hollow tube 2.
When the user wishes to release the locking mechanism of the fifth embodiment, they pull the handle 26 into an "open" position (not shown) which disengages the locking wedge 31 from the umbrella. While not shown, the handle 26, locking shaft 27 or end cap 30 may comprise a further locking mechanism for holding the shaft 27 in the "open" position, thus allowing a user to add or remove an umbrella without having to pull the handle 26. For example, the user may rotate the handle 26 to lock the shaft in position. The shaft may also comprise an anti-rotation key.

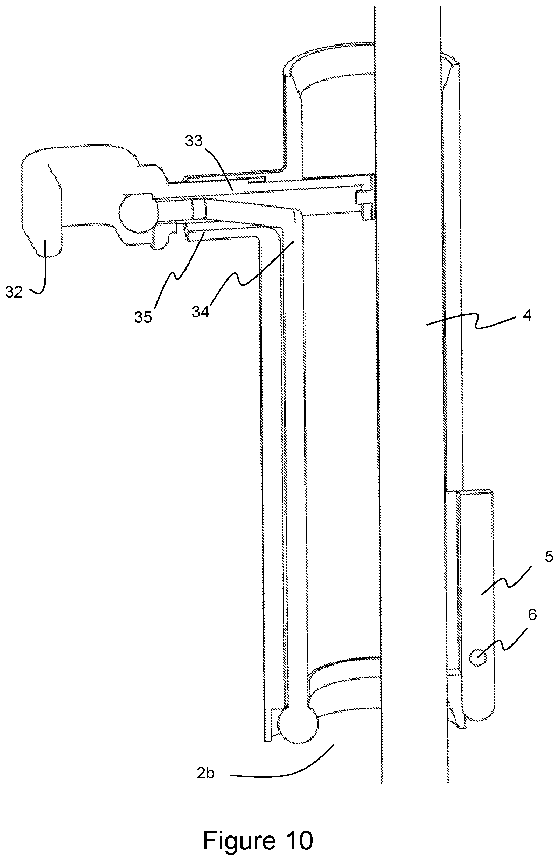

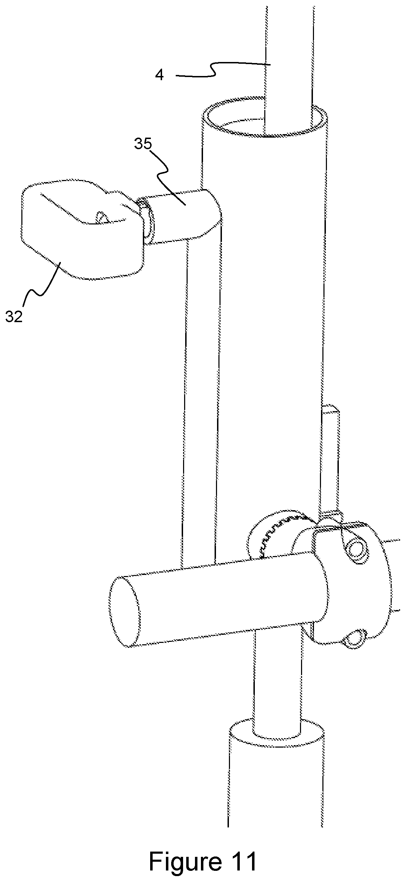

Figures 10 and 11 show a locking mechanism according to a sixth embodiment not part of the invention. The locking mechanism according to a sixth embodiment comprises an alternative locking handle 32, hollow locking shaft 33, knotted elastic line 34, and housing 35. The handle 32 and locking shaft 33 are integrally formed. An end of the hollow locking shaft 33 is biased against a part of the umbrella, such as the shaft 4, holding it in place. The locking shaft 33 is slidably mounted in the housing 35, and is arranged at 90 degrees to the axial direction of the hollow tube 2. The biasing means is provided by the knotted elastic line 34. The knotted elastic line 34 extends between the handle 32 and a point towards the second opening 2b on the hollow tube. A locking mechanism (not shown) may be used to lock the handle in the open position. The handle 32 may be rotatable so as to lock in an "open" position, as in the fifth embodiment.

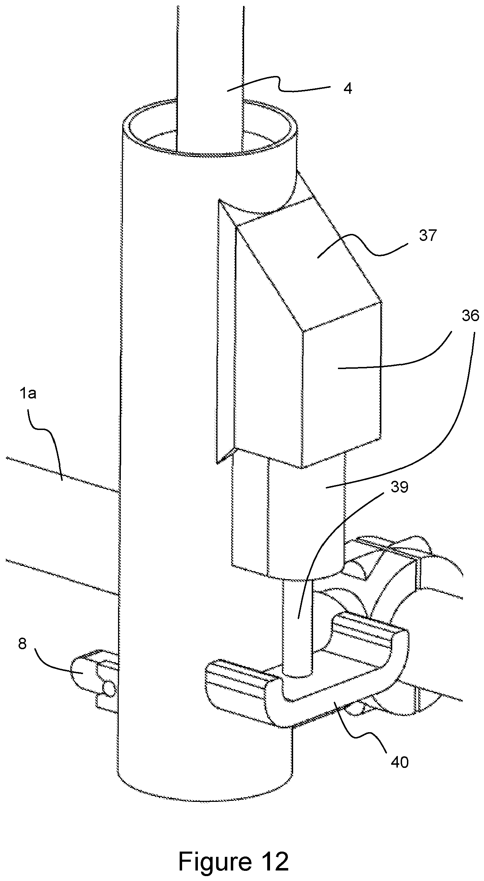

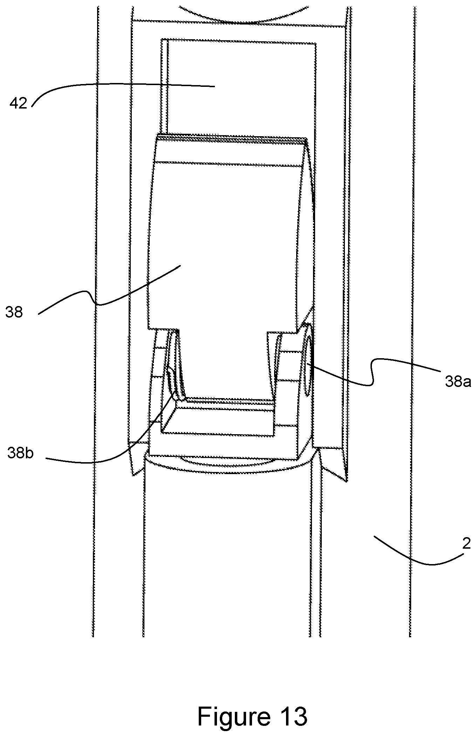

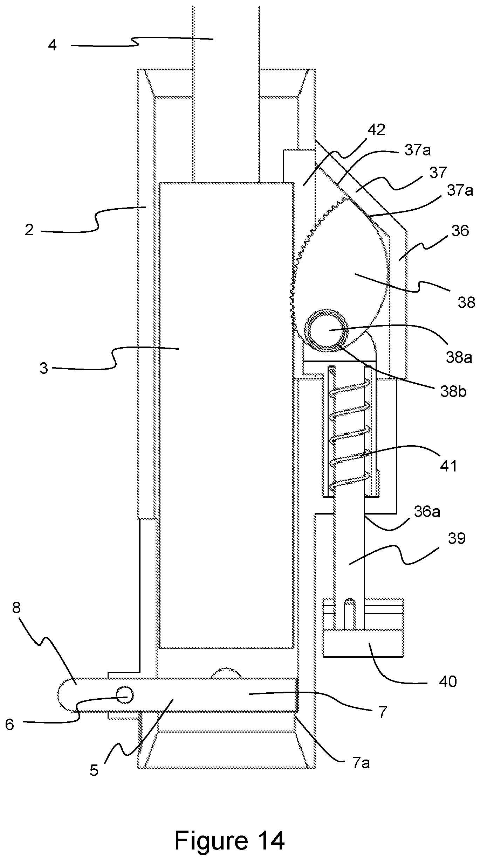

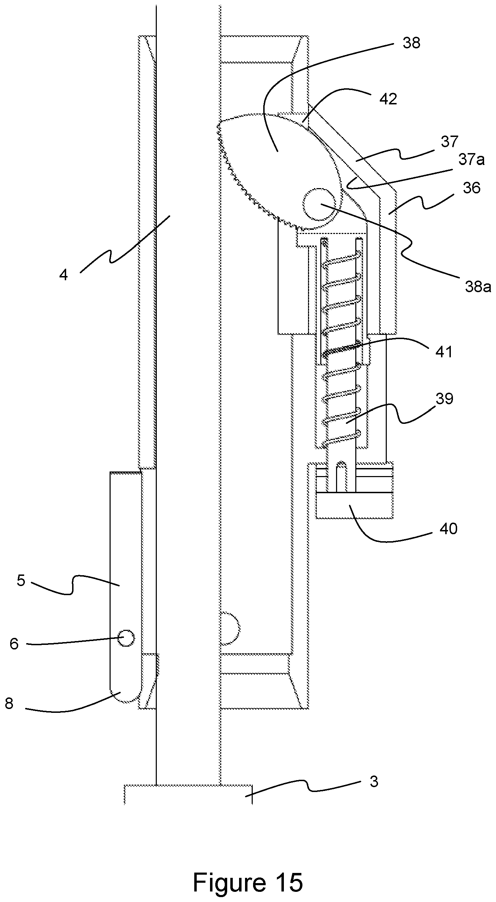

Figures 12 to 15 show a locking mechanism according to a seventh embodiment according to the invention. The locking mechanism according to the seventh embodiment comprises a housing 36 having an upper portion 37 having an inner surface 37a which acts as a cam surface for a cam 38 located within the housing 36. At the opposite end of the housing 36 is a hole 36a through which a part of a locking rod 39 may slide. The cam 38 is pivotally connected to an upper end of the locking rod 39 via a locking pivot point 38a, where the locking rod 39 is slideable relative to the housing 36. A handle 40 is connected to a bottom end of the locking rod 39. A spring 41 is located within the housing 36 and is coaxially arranged around the locking rod 39. The spring 41 acts between the housing 36 (which is fixed with respect to the hollow tube 2) and the locking rod 39. A return torsion spring 38b acts at the pivot point between the cam 38 and the locking rod 39. An aperture 42 is arranged in the hollow tube 2 through which the cam 38, or a part of the cam, may pass through.
The seventh embodiment is moveable from an open position (shown in figures 12, 13 and 14), to a locking position, shown in Figure 15. When in the open position, the spring 41 is compressed, and the return torsion spring is substantially relaxed. Figure 13 shows a perspective view of the seventh embodiment without the housing 36. When in the open position, the cam 38 does not block the hollow tube 2, and so a handle 3 or shaft 4 of an umbrella may pass through the hollow tube 2. The locking mechanism may be held in the open position by the user holding down the handle 40, or may be held in the open position by a locking means which prevents axial movement of the locking rod 39. Once the umbrella has been put into the hollow tube 2, the locking mechanism can be moved into the locking position. When the locking rod 39 can move unimpeded, the spring 41 pushes the locking rod 39 and cam 38 upward such that the cam 38 slides along the inner surface 37a of the upper portion 37 of the housing 36.
The shape of the cam 38 is such that when pushed against the inner surface 37a the cam 38 pivots about the pivot point 38a and enters the aperture 42. The spring 41 provides enough force to overcome the force provided by the return torsion spring 38b as the cam 38 is rotated with respect to the locking rod 39. Note that the inner surface 37a is arranged at a different angle to the direction of travel of the locking rod 39. Any suitable shape may be used for either the cam 38 or the inner surface 37a of the upper portion 37 such that linear motion of the locking rod 9 is converted into rotational motion of the cam 38 relative to the locking rod 39. For example, the inner surface 37a may be curved so as to provide the same function.
The spring 41 continues to push the locking rod 39 upwards until the cam 38 makes contact with the handle 3 or shaft 4 of the umbrella, and pushes the contacted part of the umbrella against the inner surface of the hollow tube 2. When in the locking position, the return torsion spring is placed under tension, but imparts insufficient force to overcome the spring 41. Figure 15 shows the seventh embodiment in the locked position. Note that the stop member 5 has been moved to the second position (as in Figure 5). The locking mechanism according to a seventh embodiment may be used without the stop member 5, and the cam may engage the handle 3 or shaft 4 in order to hold the umbrella in place
When the user wishes to drop the umbrella through the hollow tube 2 or remove the umbrella altogether, the user pulls the handle 40 downward. This in turn pulls the locking rod 39 and cam 38 downward. The return torsion spring 38b acts to rotate the cam back out of the aperture 42 via rotation about the pivot point 38a, causing the cam 38 to disengage from the umbrella. The locking mechanism according to a seventh embodiment may then be mechanically held in the open position and the umbrella adjusted. The user may also pivot the stop member 5 out of the way if one is present. The umbrella can then pass through the tube under the force of gravity, or be removed by the user. While not shown, there are many ways in which the locking mechanism according to a seventh embodiment may then be mechanically held in the open position. For example, a part of the locking rod 39 or handle 40 may interact with a latching feature on the hollow tube 2 so as to latch the locking rod in place. The handle 40 may be able to rotate coaxially relative to the locking rod 39, and a part of the handle, when rotated may engage with a feature on the hollow tube 2 so as to prevent upwards motion of the locking rod 39. The feature may be a latch, for example.

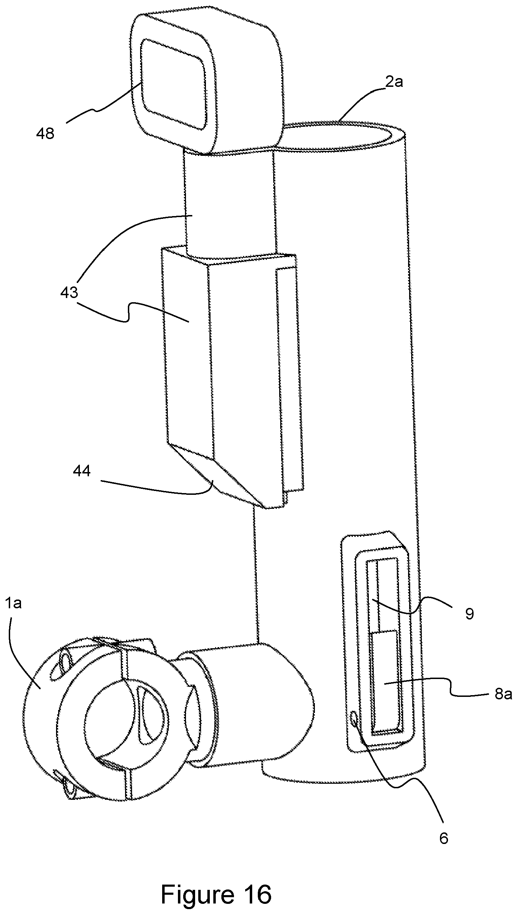

Figures 16 to 18 show a locking mechanism according to an eighth embodiment according to the invention. The locking mechanism according to the eighth embodiment works in a similar manner to the locking mechanism according to the seventh embodiment. The locking mechanism according to the eighth embodiment comprises a housing 43 which is formed on the hollow tube 2. An end 44 of the housing 43 has an inner surface 45, which acts as a cam surface and is arranged to interact with a cam 46. At the opposite end of the housing 43 is a hole 43a through which a part of a locking rod 47 may slide.

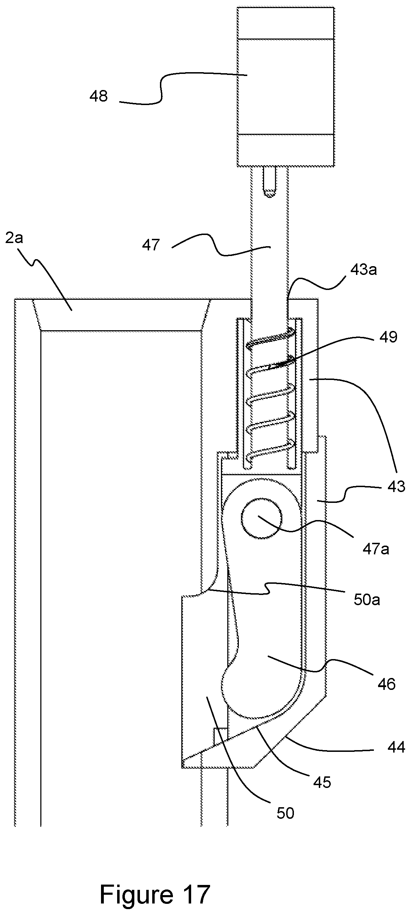

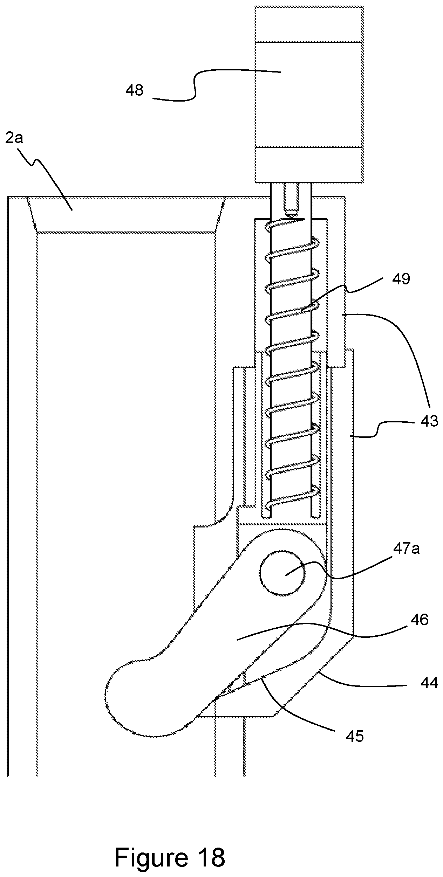

The cam 46 is substantially housed in the housing 43, and is pivotally connected to an end of the locking rod 47 via a locking pivot point 47a. A handle 48 is connected to the other end of the locking rod 47. A spring 49 is coaxially arranged around the locking rod 47, and acts between the housing 43 and the locking rod 47. The stored elastic energy in the spring 49 is greater when in the open position (Figure 17) than when in the locking position (Figure 16 and 18), such that, unimpeded, the spring urges the cam 46 towards the locking position. There is an aperture 50 in the hollow tube 2 through which the cam 46, or a part of the cam, may pass through. Note that while Figures 17 and 18 show a part of the housing 43 extending into the aperture 50, this is not necessary.

When the locking rod 47 is not held be the user, or axially locked in place, the spring 49 acts to push the cam 46 towards the inner surface 45. The shape of the cam 46 and/or the inner surface is such that when the cam 46 is pushed against the inner surface 45, the cam 46 pivots about the pivot point 47a and enters the aperture 50.

The spring 49 continues to extend until the cam 46 makes contact with the handle 3 or shaft 4 of the umbrella within the hollow tube 2, and pushes the contacted part of the umbrella against an inner surface of the hollow tube 2, which holds the umbrella in place. Figure 18 shows the eighth embodiment in the locked position. For clarity, Figure 18 does not show an umbrella, nor does Figure 18 show the spring 41 in an extended position. However, these features can be seen in Figure 15 of the seventh embodiment.

Any suitable shape may be used for either the cam 46 or the inner surface 45 of the end 44 such that linear motion of the locking rod 47 is converted into rotational motion of the cam 46 relative to the locking rod 47. For example, the inner surface 45 may be curved, rather than straight, so as to provide the same function.

An upper part 50a of the aperture 50 may be curved so as to facilitate return of the cam 46 into the housing 43 when moving from the locking position to the open position.

When the user wishes to drop the umbrella through the hollow tube 2 or remove the umbrella altogether, the user pulls the handle 48 upwards. This in turn pulls the locking rod 47 and cam 46 upwards. As the cam loses contact with the inner surface 45, it begins to rotate back into the housing 43, disengaging from the umbrella. The cam may be passively rotated back into the housing 43 by gravity, or may be rotated by a return torsion spring, or via interaction with the curved upper surface 50a of the aperture 50 as the cam is lifted upwards. The user may then pivot the stop member 5 out of the way if necessary. Note that the stop member may or may not be used with the eighth embodiment.

The locking mechanism according to an eighth embodiment may then be either be held by the user, or mechanically held in the open position and the umbrella adjusted. While not shown, there are many ways in which the locking mechanism according to the eighth embodiment may be mechanically held in the open position.

The locking rods 39, 47 of the seventh and eighth embodiments are arranged so as to be parallel with the hollow tube. This helps to reduce the dimensions of the umbrella holder.

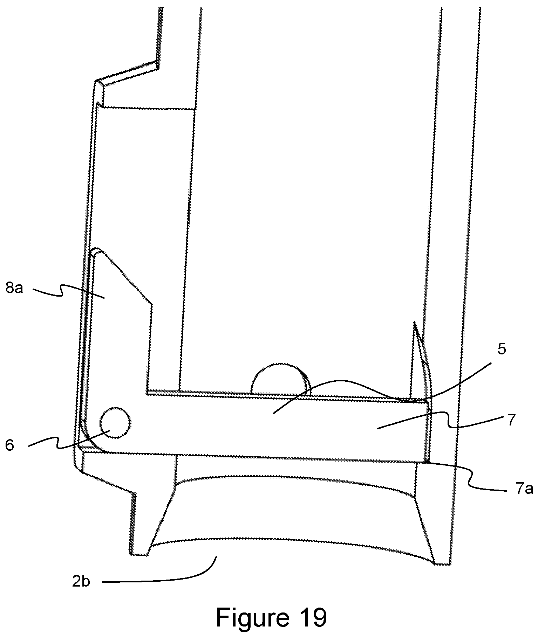

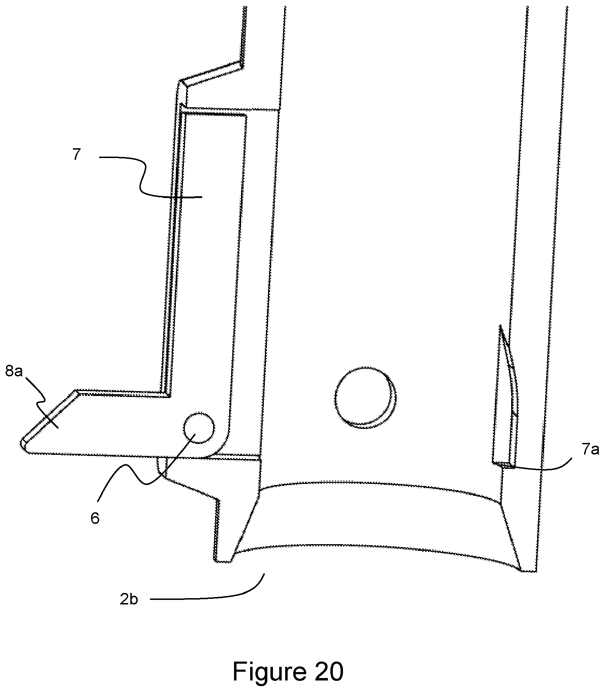

Figure 16 shows an alternative handle 8a of the stop member 5, which rather than protruding out from the aperture 9, is rotated 90 degrees from stop plate 7, such that the stop plate 7 and handle 8a have an "L" shaped cross section. When the user wishes to disengage the stop member, they place a finger within the aperture 9, and pull the alternative handle 8a out, which cause the stop member to pivot about the pivot point 6, which is located at the corner of the "L". The alternative handle 8a is shown in Figures 19 and 20.

While the cam 14, 10, 38, 46 is shown as being curved in two dimensions (i.e. oval in the x-y cross section, and rectangular in the x-z, y-z cross sections) it will be appreciated that the cam 14, 10, 38, 46 may curve in either the x-z and y-z cross sections. For example, when looking from above, i.e. through the hollow tube, the umbrella abutment end 12 may have a curved profile. The curved profile may have a similar curvature to the hollow tube 2, such that wherever the umbrella shaft or handle is located with the hollow tube 2, the cam 10, 14, 38, 46 when tightened will make contact with the umbrella, pressing it against the inner surface of the hollow tube 2 and holding it in place. Similarly, the locking wedge 31 and the end of the hollow locking shaft 33 may have similar curved profiles to achieve the same effect.

While the hollow tube 2 is shown as having a circular cross section (when viewed end on) it will be appreciated that the tube need not be exactly circular in cross section. Indeed, any suitable shape for receiving an umbrella shaft or handle may be used for the hollow tube 2, for example, the tube may be a square tube, having a square cross section when viewed from above.

The width (perpendicular to the z axis) of the part of the cam 10, 14, 38, 46, locking wedge 31 or locking shaft 33 that contacts the shaft 4 of the umbrella should be large enough to contact the shaft 4, and press it against the inner surface of the hollow tube 2 irrespective of the position of the shaft 4 in the hollow tube 2. For example, if the hollow tube has a circular cross section, then for an umbrella having a shaft with a diameter of about 10% of the diameter of the hollow tube 2, the width of the cam may be about 60% of the diameter of the hollow tube 2. Any larger and the cam 10, 14, 38, 46, locking wedge 31 or locking shaft 33 may need to have the curved profile described above. This is because an edge of the cam 10, 14, 38, 46, locking wedge 31 or locking shaft 33 may abut the inner surface of the hollow tube 2 before the cam 10, 14, 38, 46, locking wedge 31 or locking shaft 33 is able to securely hold the umbrella shaft 4 in place. If the hollow tube 2 has a square cross section, then the width of the cam 10, 14, 38, 46, locking wedge 31 or locking shaft 33, can be larger. In exemplary apparatus, the width of the cam 10, 14, 38, 46, locking wedge 31 or locking shaft 33 may be greater than 60% of the width of the tube 2, greater than 80% of the width of the tube 2, greater than 90% of the width of the tube 2, and may even be substantially 100% of the width of the hollow tube 2.

Umbrella shafts are usually made of metal and so they may be difficult to secure in place due to the relatively low coefficient of friction between the metal shaft and stiff plastic materials that may be used to manufacture the elements griping the shaft, such as the cam 10. Therefore, the material used for the part of the cam 10, 14, 38, 46, locking wedge 31 or locking shaft 33, that contacts the umbrella may comprise a resiliently deformable material. Specifically, the resiliently deformable material may have an increased coefficient of friction with the shaft 4 than the stiff plastic materials that may be used to manufacture other elements of the apparatus and/or the remainder of the cam. The resiliently deformable material may be rubber for example. The inner surface, or a part of the inner surface, of the hollow tube 2 may also comprise a material suitable for assisting with the grip of the shaft 4 of the umbrella, as set out above.
It will be appreciated by the person of skill in the art that various modifications may be made to the above described embodiment without departing from the scope of the present invention as defined in the appended claims. For example, the locking mechanisms of the second, third, fifth, sixth, seventh and eighth embodiments may be used in conjunction with, or without the stop member 5 of the first embodiment. The person of skill in the art will also realise that where appropriate, suitable parts of any of the embodiments may be used with other embodiments as long as they fall within the scope of the appended claims.

## Claims

1. A golf trolley umbrella holder (1) comprising;
an attachment device arranged to attach the golf trolley umbrella holder (1) to a golf trolley;
an umbrella holding device comprising a holder (2) having a first and second opening (2a, 2b), the openings (2a, 2b) arranged to allow a passage of a part of an umbrella (3, 4);
a locking mechanism comprising a housing (29),
**characterised in that** the golf trolley umbrella holder further comprises:
a locking rod (27) slidably mounted within the housing (29), a cam pivotally connected to the locking rod (27) via a pivot, a biasing member (28) arranged to act between the housing (29) and the locking rod (27); and **in that**
the housing (29) comprises a cam surface which is arranged such that, in use, the biasing member (28) acts to urge the cam against the cam surface, causing the cam to rotate about the pivot and further causing a surface (31) of the cam to apply a force to the part of the umbrella (3, 4) in a locking arrangement so as to prevent any axial movement of the umbrella.

2. A golf trolley umbrella holder (1) as in claim 1, **characterised in that** the locking arrangement is such that the part of the umbrella is held between the surface (31) of the cam and an internal wall of the holder (1).

3. A golf trolley umbrella holder (1) as in claim 1 or claim 2, **characterised in that** the surface (31) of the cam has a width equal to or greater than half of an internal width of the holder (1).

4. A golf trolley umbrella holder (1) as in any one of claims 1 to 3, **characterised in that** the surface (31) of the cam comprises a resiliently deformable material.

5. A golf trolley umbrella holder (1) as in any preceding claim, **characterised in that** the inner surface of the holder comprises a resiliently deformable material.

6. A golf trolley umbrella holder as in any preceding claim, **characterised in that** the locking rod (27) is arranged substantially parallel to the holder.

7. A golf trolley umbrella holder as in any preceding claim, **characterised in that** the locking rod (27) comprises a handle (26) located at an opposite end to the pivot.

8. A golf trolley umbrella holder (1) as in any preceding claim, **characterised in that** the umbrella holding device comprises an aperture through which the surface (31) of the cam is arranged to pass through such that the surface of the cam can engage with the part of the umbrella (3, 4).

9. A golf trolley umbrella holder (1) as in any preceding claim, **characterised in that** the biasing member (28) comprises a spring (28).

10. A golf trolley umbrella holder as in claim 9, **characterised in that** the spring (28) is coaxially arranged around a part of the locking rod (27).

11. A golf trolley umbrella holder (1) as in any preceding claim, **characterised in that** the holder (1) comprises a tube (2) like structure having a generally circular cross section.

## Patentansprüche

1. Golfwagenregenschirmhalter (1), der Folgendes umfasst:
eine Befestigungseinrichtung, die ausgelegt ist, den Golfwagenregenschirmhalter (1) an einem Golfwagen zu befestigen;
eine Regenschirmhalteeinrichtung, die einen Halter (2) aufweist, der eine erste und eine zweite Öffnung (2a, 2b) besitzt, wobei die Öffnungen (2a, 2b) ausgelegt sind, einen Durchgang eines Teils eines Regenschirms (3, 4) zu ermöglichen; und
einen Verriegelungsmechanismus, der ein Gehäuse (29) aufweist,
**dadurch gekennzeichnet, dass** der Golfwagenregenschirmhalter ferner Folgendes umfasst:
einen Verriegelungsstab (27), der verschiebbar im Gehäuse (29) angebracht ist, einen Nocken, der mittels eines Drehelements drehbar mit dem Verriegelungsstab (27) verbunden ist, und ein Vorbelastungselement (28), das ausgelegt ist, zwischen dem Gehäuse (29) und dem Verriegelungsstab (27) zu wirken; und
dass das Gehäuse (29) eine Nockenoberfläche enthält, die derart angeordnet ist, dass das Vorbelastungselement (28) bei Verwendung derart wirkt, dass es den Nocken gegen die Nockenoberfläche drückt, was bewirkt, dass der Nocken sich um das Drehelement dreht, und ferner bewirkt, dass eine Oberfläche (31) des Nocken eine Kraft auf den Teil des Regenschirms (3, 4) in einer Verriegelungsanordnung ausübt, um jede axiale Bewegung des Regenschirms zu verhindern.

2. Golfwagenregenschirmhalter (1) nach Anspruch 1, **dadurch gekennzeichnet, dass** die Verriegelungsanordnung derart ausgelegt ist, dass der Teil des Regenschirms zwischen der Oberfläche (31) des Nockens und einer Innenwand des Halters (1) gehalten wird.

3. Golfwagenregenschirmhalter (1) nach Anspruch 1 oder 2, **dadurch gekennzeichnet, dass** die Oberfläche (31) des Nockens eine Breite besitzt, die gleich oder größer als die Hälfte einer Innenweite des Halters (1) ist.

4. Golfwagenregenschirmhalter (1) nach einem der Ansprüche 1 bis 3, **dadurch gekennzeichnet, dass** die Oberfläche (31) des Nockens ein elastisch verformbares Material enthält.

5. Golfwagenregenschirmhalter (1) nach einem vorhergehenden Anspruch, **dadurch gekennzeichnet, dass** die Innenfläche des Halters ein elastisch verformbares Material enthält.

6. Golfwagenregenschirmhalter (1) nach einem vorhergehenden Anspruch, **dadurch gekennzeichnet, dass** der Verriegelungsstab (27) im Wesentlichen parallel zum Halter ausgerichtet ist.

7. Golfwagenregenschirmhalter (1) nach einem vorhergehenden Anspruch, **dadurch gekennzeichnet, dass** der Verriegelungsstab (27) einen Griff (26) aufweist, der sich an einem dem Drehelement gegenüberliegenden Ende befindet.

8. Golfwagenregenschirmhalter (1) nach einem vorhergehenden Anspruch, **dadurch gekennzeichnet, dass** die Regenschirmhalteeinrichtung eine Öffnung enthält, durch die die Oberfläche (31) des Nockens derart angeordnet ist, dass sie derart verläuft, dass die Oberfläche des Nockens mit dem Teil des Regenschirms (3, 4) in Eingriff sein kann.

9. Golfwagenregenschirmhalter (1) nach einem vorhergehenden Anspruch, **dadurch gekennzeichnet, dass** das Vorbelastungselement (28) eine Feder (28) umfasst.

10. Golfwagenregenschirmhalter (1) nach Anspruch 9, **dadurch gekennzeichnet, dass** die Feder (28) koaxial um einen Teil des Verriegelungsstabes (27) angeordnet ist.

11. Golfwagenregenschirmhalter (1) nach einem vorhergehenden Anspruch, **dadurch gekennzeichnet, dass** der Halter (1) eine Struktur, die einem Rohr (2) ähnlich ist und einen im Wesentlichen kreisförmigen Querschnitt besitzt, umfasst.

## Revendications

1. Porte-parapluie de chariot de golf (1) comprenant:
un dispositif de fixation agencé pour attacher le porte-parapluie de chariot de golf (1) à un chariot de golf;
un dispositif de maintien de parapluie comprenant un support (2) présentant une première et une seconde ouvertures (2a, 2b), les ouvertures (2a, 2b) sont agencées pour permettre un passage d'une partie d'un parapluie (3, 4);
un mécanisme de verrouillage comprenant un boîtier (29),
**caractérisé en ce que** le porte-parapluie de chariot de golf comprend en outre:
une tige de verrouillage (27) montée de manière coulissante dans le boîtier (29), une came reliée de manière pivotante à la tige de verrouillage (27) via un pivot, un élément de sollicitation (28) agencé pour agir entre le boîtier (29) et la tige de verrouillage (27) ; et **en ce que**
le boîtier (29) comprend une surface de came qui est agencée de sorte que, lorsqu'utilisé, l'élément de sollicitation (28) agit pour pousser la came contre la surface de came, provoquant la rotation de la came autour du pivot et obligeant en outre une surface (31) de la came à appliquer une force sur la partie du parapluie (3, 4) dans un agencement de verrouillage de manière à empêcher tout mouvement axial du parapluie.

2. Porte-parapluie de chariot de golf (1) selon la revendication 1, **caractérisé en ce que** l'agencement de verrouillage est tel que la partie du parapluie est maintenue entre la surface (31) de la came et une paroi interne du support (1).

3. Porte-parapluie de chariot de golf (1) selon la revendication 1 ou la revendication 2, **caractérisé en ce que** la surface (31) de la came présente une largeur égale ou supérieure à la moitié d'une largeur interne du support (1).

4. Porte-parapluie de chariot de golf (1) selon l'une quelconque des revendications 1 à 3, **caractérisé en ce que** la surface (31) de la came comprend un matériau élastiquement déformable.

5. Porte-parapluie de chariot de golf (1) selon l'une quelconque des revendications précédentes, **caractérisé en ce que** la surface interne du support comprend un matériau élastiquement déformable.

6. Porte-parapluie de chariot de golf selon l'une quelconque des revendications précédentes, **caractérisé en ce que** la tige de verrouillage (27) est agencée substantiellement parallèlement au support.

7. Porte-parapluie de chariot de golf selon l'une quelconque des revendications précédentes, **caractérisé en ce que** la tige de verrouillage (27)comprend une poignée située à une extrémité opposée au pivot.

8. Porte-parapluie de chariot de golf (1) selon l'une quelconque des revendications précédentes, **caractérisé en ce que** le dispositif de maintien de parapluie comprend une ouverture à travers laquelle la surface (31) de la came est agencée pour traverser de telle sorte que la surface de la came puisse s'engager avec la partie du parapluie (3, 4).

9. Porte-parapluie de chariot de golf (1) selon l'une quelconque des revendications précédentes, **caractérisé en ce que** l'élément de sollicitation (28) comprend un ressort (28).

10. Porte-parapluie de chariot de golf selon la revendication 9, **caractérisé en ce que** le ressort (28) est disposé coaxialement autour d'une partie de la tige de verrouillage (27).

11. Porte-parapluie de chariot de golf (1) selon l'une quelconque des revendications précédentes, **caractérisé en ce que** le support (1) comprend une structure en forme de tube (2) présentant une section transversale généralement circulaire.
